# EUROPEAN PATENT SPECIFICATION

(11) **EP 4 041 563 B1**
(45) Date of publication and mention of the grant of the patent: **09.08.2023**
(21) Application number: 20799897.2
(22) Date of filing: 08.10.2020
(51) Int. Cl.: B41M 5/52, C09D 175/04, C08G 18/08, C08G 18/28, C08G 18/32, C08G 18/42, C08G 18/48, C08G 18/75, C09D 175/08, C09D 175/06, C08G 18/12, C08G 18/34

(54) **INK-RECEPTIVE COATINGS FOR PRINTING ON ABSORBING SUBSTRATES**
TINTENAUFNEHMENDE BESCHICHTUNGEN ZUM BEDRUCKEN VON ABSORBIERENDEN SUBSTRATEN
REVÊTEMENTS RÉCEPTEURS D'ENCRE POUR IMPRESSION SUR DES SUBSTRATS ABSORBANTS

(30) Priority: 09.10.2019 US 201962912697 P
(43) Date of publication of application: 17.08.2022
(73) Proprietor: Lubrizol Advanced Materials, Inc., Cleveland, OH 44141-3247 (US)
(72) Inventor: DINESCU, Liviu, CLEVELAND, Ohio 44141-3247 (US); LUBNIN, Alexander V., CLEVELAND, Ohio 44141-3247 (US); LENHARD, Susan L., CLEVELAND, Ohio 44141-3247 (US); SCHWARTZWALDER, Gianina, CLEVELAND, Ohio 44141-3247 (US); SCHROEDER, Kurt, CLEVELAND, Ohio 44141-3247 (US)
(74) Representative: Bradley, Josephine Mary
(86) International application number: PCT/US2020/054673
(87) International publication number: WO 2021/072009

(56) References cited:
- US-A1- 2003 224 150
- US-A1- 2008 081 160

## Description

### TECHNICAL FIELD

The disclosed technology relates to ink-receptive coatings for printing on substrates.

### BACKGROUND

Printing of inks, such as water-based pigment inks or ultraviolet (UV)-curable inks, onto corrugated board surfaces is a rapidly growing technology. Printing the ink directly onto the corrugated board may result in poor image quality, at least in part due to the absorbent and/or irregular nature of the corrugated board surface. The porosity and irregularities in the corrugated board present a very demanding challenge to control the deposition and drop spread of the applied ink. High quality images, durability (such as adhesion and rub resistance of the ink) make for a very demanding print system. Primer technology is one approach for conditioning the surface of absorbent corrugated board in order to achieve all of the necessary and/or desired properties of the final image. The application of the primer to the board must be economical and uniform across the width of the board, must not significantly impact the color of the board surface, and the primer should be low-foaming and easy to clean. Furthermore, it is highly desirable to have a single primer that works well across different board types, such as, Kraft (uncoated board), Mottle (moderate image quality coated board) and Kemi (high quality coated board). Additionally, the surface friction properties of printed image and primed board surface coming into contact with other printed and primed surfaces are important to prevent printed boxes from sliding past one another.

Radiation-curable inks have been used for many years to decorate the surfaces of substrates via both analog and digital printing methods. The energy-curable monomers and oligomers in radiation-curable inks function as the carrier for the colorants, such as pigments which are favored for their durability. The oligomers are often acrylates but may also be urethane-based. UV-curable inks (such as digital UV-curable inks) may also be favored, since the monomeric and oligomeric UV carrier does not appreciably dry out in the printhead when exposed to air, and therefore results in a reliable means of depositing ink onto the target substrate. Once cured by an appropriate UV radiation exposure step, the inks and resulting images are typically durable, however, the cured ink may show poor adhesion to the target substrate.

WO 02/062894 A1 discloses primer coatings which comprise polyurethane binders in combination with fillers, such as, silicas, clays and other inorganic pigments, and include substrates selected from polymeric films and high-gloss papers.

US 6,881,458 B2 discloses the use of certain polymer resins and coating formulations as primers for surfaces which are printed with UV-curable inks. Disclosed are urethane binders, combinations of urethanes, combinations of urethanes and acrylics, and urethane-acrylic hybrids. Urethane resins described in US 6,881,458 are those having impact resistance of 100 in-lb and elongations of at least 100%. When used in combination, the second urethane resin has an elongation 1.5 times that of the first urethane resin. Broad ranges of resin molecular weight, solubility parameters and glass transition temperatures are described. It is pointed out that fillers in the coating composition are optional, and that the resins function well without added fillers.

US 2008/0081160 A1 and US 6,897,281 B2 disclose coating compositions comprising non-ionic urethane dispersion binders combined with calcium carbonate fillers and blended with a second type of resin. Polyurethane dispersion resins are disclosed as a potential second resin type and examples are provided with acrylic, vinyl chloride and acrylic-urethane hybrids as the second polymer.

WO 2010/106023 A1 discloses a coating composition for paper comprising a nonionic urethane comb polymer having between 80 and 99% ethylene oxide side chains (at least 500 MW), and 30-80% inorganic pigment. Examples include a styrene-butadiene binder in the coating formulation.

Water-based pigmented inks are an alternative to the UV-curable monomer and oligomer approach used with UV-curable inks. The water-based pigment inks may be formulated to be UV-curable, or may be formulated with resins and binders and thermally dried. Significant challenges exist with printing of water-based inks onto corrugated surfaces, and primer chemistry may be significantly different than that which is necessary to prime the corrugated board in order to receive UV-curable inks.

There remains a need for an ink-receptive coating composition that may be applied to a target substrate that results in a primed surface that satisfies the needs of the print system. There also remains a need for primer chemistry that may work to provide high quality, durable images in print systems (such as digital print systems).

### SUMMARY

The subject matter disclosed herein provides ink-receptive coating compositions comprising: (a) an aqueous anionic polyurethane dispersion; and (b) an aqueous solution of a nonionic polyurethane.

In certain embodiments, the anionic polyurethane is a polyether-based polyurethane, polyester-based polyurethane and/or a polycarbonate-based polyurethane. In certain embodiments, the anionic polyurethane has a number-average molecular weight of at least 10,000 g/mol, such as from 10,000 to 1,000,000 g/mol; or at least 15,000 g/mol, such as from 15,000 to 1,000,000 g/mol; or at least 20,000 g/mol, such as from 20,000 to 1,000,000 g/mol. In certain embodiments, the anionic polyurethane has a number-average molecular weight of at most 1,000,000 g/mol, or at most 900,000, or at most 800,000 g/mol, or at most 700,000 g/mol, or at most 600,000 g/mol, or at most 500,000 g/mol, or at most 400,000 g/mol, or at most 300,000 g/mol, or at most 200,000 g/mol, or at most 100,000 g/mol, or at most 75,000 g/mol, or at most 50,000 g/mol, or at most 40,000 g/mol, or at most 30,000 g/mol, or at most 25,000 g/mol. In certain embodiments, the composition may include a gel fraction (insoluble fraction) of the anionic polyurethane, such that the gel fraction is insoluble when it is prepared for a molecular-weight analysis, such as GPC analysis discussed below; in these instances, the above-specified ranges of molecular weights are applicable to the soluble (in molecular-weight analysis) fraction of the anionic polyurethane.

In certain embodiments, the anionic polyurethane has an ethylene oxide monomeric unit content of less than 10% (such as 9%, 8%, 7%, 6%, 5%, 4%, 3%, 2% or 1%) by weight, based on the total dry weight of the anionic polyurethane.

In certain embodiments, the nonionic polyurethane has a number-average molecular weight of at most 30,000 g/mol, such as from 2,000 to 30,000 g/mol, or from 2,000 to 25,000 g/mol, or from 2,000 to 20,000 g/mol, or from 2,000 to 15,000 g/mol, or from 2,000 to 10,000 g/mol, or from 5,000 to 30,000 g/mol, or from 5,000 to 25,000 g/mol, or from 5,000 to 20,000 g/mol, or from 5,000 to 15,000 g/mol, or from 5,000 to 10,000 g/mol.

In certain embodiments, the nonionic polyurethane has an ethylene oxide monomeric unit content of more than 20% by weight, such as more than 25% by weight, or more than 30% by weight, or more than 35% by weight, or more than 40% by weight, or more than 45% by weight, or more than 50% by weight, or more than 55% by weight, or more than 60% by weight, or more than 65% by weight, based on the total dry weight of the nonionic polyurethane. In certain embodiments, the nonionic polyurethane has an ethylene oxide monomeric unit content of from 20% (such as 25%, 30%, 35%, 40%, 45%, 50%, 55%, 60%, or 65%) to 90% (such as 85%, 80%, 75%, or 70%) by weight, based on the total dry weight of the nonionic polyurethane. In certain embodiments, the nonionic polyurethane has an ethylene oxide monomeric unit content of not less than 50% by weight, based on the total dry weight of the nonionic polyurethane.

It is to be understood that the ethylene oxide monomeric unit content of the nonionic polyurethane may be present in the main chain of the polyurethane, the side chain(s) of the polyurethane, and/or in terminal groups of the polyurethane. The relative amounts of ethylene oxide monomeric units present in each of these portions of the polyurethane molecule(s) may impact the properties of the nonionic polyurethane. The embodiments described herein which refer to the amounts of ethylene oxide monomeric units should be considered to be combinable with each other, to the extent that doing so is physically possible.

In certain embodiments, the nonionic polyurethane comprises ethylene oxide monomeric side-chain units in an amount of 12% (such as 15%, 20%, 25%, 30%, 35%, 40%, 45% or 50%) to 80% (such as 75%, 70%, 65%, 60%, or 55%) by weight, based on the total dry weight of the nonionic polyurethane.

In certain embodiments, the nonionic polyurethane comprises ethylene oxide monomeric main-chain units in an amount of less than 75% (such as 70%, 65%, 60%, 55%, 50%, 45%, 40%, 35%, 30%, 25%, 20%, 15%, 10%, 5%, 4%, 3%, 2%, or 1%) by weight, based on the total dry weight of the nonionic polyurethane. In certain embodiments, the nonionic polyurethane is substantially free of ethylene oxide monomeric main-chain units. In certain embodiments, the nonionic polyurethane is free of ethylene oxide monomeric main-chain units.

In certain embodiments, 100% of all ethylene oxide monomeric units in the nonionic polyurethane comprise ethylene oxide monomeric side-chain units and/or poly(ethylene oxide) terminal groups. In certain embodiments, 100% of all ethylene oxide monomeric units in the nonionic polyurethane comprise ethylene oxide monomeric side-chain units. In certain embodiments, 100% of all ethylene oxide monomeric units in the nonionic polyurethane comprise poly(ethylene oxide) terminal groups.

In certain embodiments, at least 95% of all ethylene oxide monomeric units in the nonionic polyurethane comprise ethylene oxide monomeric side-chain units and/or poly(ethylene oxide) terminal groups. In certain embodiments, at least 95% of all ethylene oxide monomeric units in the nonionic polyurethane comprise ethylene oxide monomeric side-chain units. In certain embodiments, at least 95% of all ethylene oxide monomeric units in the nonionic polyurethane comprise poly(ethylene oxide) terminal groups.

In certain embodiments, at least 90% of all ethylene oxide monomeric units in the nonionic polyurethane comprise ethylene oxide monomeric side-chain units and/or poly(ethylene oxide) terminal groups. In certain embodiments, at least 90% of all ethylene oxide monomeric units in the nonionic polyurethane comprise ethylene oxide monomeric side-chain units. In certain embodiments, at least 90% of all ethylene oxide monomeric units in the nonionic polyurethane comprise poly(ethylene oxide) terminal groups.

In certain embodiments, at least 85% of all ethylene oxide monomeric units in the nonionic polyurethane comprise ethylene oxide monomeric side-chain units and/or poly(ethylene oxide) terminal groups. In certain embodiments, at least 85% of all ethylene oxide monomeric units in the nonionic polyurethane comprise ethylene oxide monomeric side-chain units. In certain embodiments, at least 85% of all ethylene oxide monomeric units in the nonionic polyurethane comprise poly(ethylene oxide) terminal groups.

In certain embodiments, at least 80% of all ethylene oxide monomeric units in the nonionic polyurethane comprise ethylene oxide monomeric side-chain units and/or poly(ethylene oxide) terminal groups. In certain embodiments, at least 80% of all ethylene oxide monomeric units in the nonionic polyurethane comprise ethylene oxide monomeric side-chain units. In certain embodiments, at least 80% of all ethylene oxide monomeric units in the nonionic polyurethane comprise poly(ethylene oxide) terminal groups.

In certain embodiments, at least 75% of all ethylene oxide monomeric units in the nonionic polyurethane comprise ethylene oxide monomeric side-chain units and/or poly(ethylene oxide) terminal groups. In certain embodiments, at least 75% of all ethylene oxide monomeric units in the nonionic polyurethane comprise ethylene oxide monomeric side-chain units. In certain embodiments, at least 75% of all ethylene oxide monomeric units in the nonionic polyurethane comprise poly(ethylene oxide) terminal groups.

In certain embodiments, at least 70% of all ethylene oxide monomeric units in the nonionic polyurethane comprise ethylene oxide monomeric side-chain units and/or poly(ethylene oxide) terminal groups. In certain embodiments, at least 70% of all ethylene oxide monomeric units in the nonionic polyurethane comprise ethylene oxide monomeric side-chain units. In certain embodiments, at least 70% of all ethylene oxide monomeric units in the nonionic polyurethane comprise poly(ethylene oxide) terminal groups.

In certain embodiments, at least 65% of all ethylene oxide monomeric units in the nonionic polyurethane comprise ethylene oxide monomeric side-chain units and/or poly(ethylene oxide) terminal groups. In certain embodiments, at least 65% of all ethylene oxide monomeric units in the nonionic polyurethane comprise ethylene oxide monomeric side-chain units. In certain embodiments, at least 65% of all ethylene oxide monomeric units in the nonionic polyurethane comprise poly(ethylene oxide) terminal groups.

In certain embodiments, at least 60% of all ethylene oxide monomeric units in the nonionic polyurethane comprise ethylene oxide monomeric side-chain units and/or poly(ethylene oxide) terminal groups. In certain embodiments, at least 60% of all ethylene oxide monomeric units in the nonionic polyurethane comprise ethylene oxide monomeric side-chain units. In certain embodiments, at least 60% of all ethylene oxide monomeric units in the nonionic polyurethane comprise poly(ethylene oxide) terminal groups.

In certain embodiments, at least 55% of all ethylene oxide monomeric units in the nonionic polyurethane comprise ethylene oxide monomeric side-chain units and/or poly(ethylene oxide) terminal groups. In certain embodiments, at least 55% of all ethylene oxide monomeric units in the nonionic polyurethane comprise ethylene oxide monomeric side-chain units. In certain embodiments, at least 55% of all ethylene oxide monomeric units in the nonionic polyurethane comprise poly(ethylene oxide) terminal groups.

In certain embodiments, at least 50% of all ethylene oxide monomeric units in the nonionic polyurethane comprise ethylene oxide monomeric side-chain units and/or poly(ethylene oxide) terminal groups. In certain embodiments, at least 50% of all ethylene oxide monomeric units in the nonionic polyurethane comprise ethylene oxide monomeric side-chain units. In certain embodiments, at least 50% of all ethylene oxide monomeric units in the nonionic polyurethane comprise poly(ethylene oxide) terminal groups.

In certain embodiments, at least 45% of all ethylene oxide monomeric units in the nonionic polyurethane comprise ethylene oxide monomeric side-chain units and/or poly(ethylene oxide) terminal groups. In certain embodiments, at least 45% of all ethylene oxide monomeric units in the nonionic polyurethane comprise ethylene oxide monomeric side-chain units. In certain embodiments, at least 45% of all ethylene oxide monomeric units in the nonionic polyurethane comprise poly(ethylene oxide) terminal groups.

In certain embodiments, at least 40% of all ethylene oxide monomeric units in the nonionic polyurethane comprise ethylene oxide monomeric side-chain units and/or poly(ethylene oxide) terminal groups. In certain embodiments, at least 40% of all ethylene oxide monomeric units in the nonionic polyurethane comprise ethylene oxide monomeric side-chain units. In certain embodiments, at least 40% of all ethylene oxide monomeric units in the nonionic polyurethane comprise poly(ethylene oxide) terminal groups.

In certain embodiments, at least 35% of all ethylene oxide monomeric units in the nonionic polyurethane comprise ethylene oxide monomeric side-chain units and/or poly(ethylene oxide) terminal groups. In certain embodiments, at least 35% of all ethylene oxide monomeric units in the nonionic polyurethane comprise ethylene oxide monomeric side-chain units. In certain embodiments, at least 35% of all ethylene oxide monomeric units in the nonionic polyurethane comprise poly(ethylene oxide) terminal groups.

In certain embodiments, at least 30% of all ethylene oxide monomeric units in the nonionic polyurethane comprise ethylene oxide monomeric side-chain units and/or poly(ethylene oxide) terminal groups. In certain embodiments, at least 30% of all ethylene oxide monomeric units in the nonionic polyurethane comprise ethylene oxide monomeric side-chain units. In certain embodiments, at least 30% of all ethylene oxide monomeric units in the nonionic polyurethane comprise poly(ethylene oxide) terminal groups.

In certain embodiments, at least 25% of all ethylene oxide monomeric units in the nonionic polyurethane comprise ethylene oxide monomeric side-chain units and/or poly(ethylene oxide) terminal groups. In certain embodiments, at least 25% of all ethylene oxide monomeric units in the nonionic polyurethane comprise ethylene oxide monomeric side-chain units. In certain embodiments, at least 25% of all ethylene oxide monomeric units in the nonionic polyurethane comprise poly(ethylene oxide) terminal groups.

In certain embodiments, the composition is substantially free of acrylic polymer. In certain embodiments, the composition contains no acrylic polymer. In alternative embodiments, however, the composition may include small amounts of intentionally added acrylic polymer, such as up to about 15% (for example, up to 10%, 5%, 4.5%, 4%, 3.5%, 3%, 2.5%, 2%, 1.5%, 1%, 0.9%, 0.8%, 0.7%, 0.6%, 0.5%, 0.4%, 0.3%, 0.2%, or 0.1%) by weight acrylic polymer, based on the total dry weight of the composition.

In certain embodiments, the dry weight ratio of the anionic polyurethane to the nonionic polyurethane in the composition is from 25:1 to 1:15, such as 20:1 to 1:15, or 15:1 to 1:15, or 10:1 to 1:15, or 5:1 to 1:15, or 1:1 to 1:15, or 25:1 to 1:10, or 25:1 to 1:5, or 25:1 to 1:1.

In certain embodiments, the anionic polyurethane comprises a polyurethane made by chain-extending at least one oligomer which is the reaction product of: (i) a diisocyanate; (ii) a polyol; and (iii) an acid-functional polyol and/or an acid-functional chain extender; wherein the at least one oligomer is chain-extended with a short-chain diamine and/or water. In certain embodiments, the diisocyanate comprises at least one of an aliphatic diisocyanate, araliphatic diisocyanate, aromatic diisocyanate, or a cycloaliphatic diisocyanate. In certain embodiments, the polyol comprises at least one of polyester diol, polyether diol, or polycarbonate diol. In certain embodiments, the acid-functional polyol and/or the acid-functional chain extender include one of the following acid-functional groups: carboxylic acid, sulfonic acid, or phosphonic acid. In certain embodiments, the short-chain diamine is at least one of hydrazine or ethylenediamine. Embodiments described herein refer to diisocyanates, but it is contemplated that triisocyanates and/or polyisocyanates may perform similarly to the described diisocyanates. Embodiments described herein refer to diols, but it is contemplated that polyols may perform similarly to the described diols.

In certain embodiments, the anionic polyurethane comprises from 5% (such as 10%, 15%, 20%, 25%, or 30%) to 60% (such as 55%, 50%, 45%, 40%, or 35%) by weight of the composition, based on the total dry weight of the composition.

In certain embodiments, the nonionic polyurethane comprises from 1% (such as 5%, 10%, 15% or 20%) to 50% (such as 45%, 40%, 35%, 30%, or 25%) by weight of the composition, based on the total dry weight of the composition.

In certain embodiments, the composition further comprises an inorganic filler. In certain embodiments, the inorganic filler is present in the composition in an amount of from 0.1 (such as 0.2, 0.3, 0.4, 0.5, 0.6, 0.7, 0.8, 0.9, 1, 2, 3, 4, 5, 10, 15, 20 or 25) to 50 (such as 45, 40, 35, or 30) percent by weight based on the total dry weight of the composition. In certain embodiments, the inorganic filler comprises at least one of clay, silica, calcium carbonate, or titanium dioxide. In certain embodiments, the inorganic filler comprises kaolin clay.

In certain embodiments, the composition further comprises a rheology modifier. In certain embodiments, the rheology modifier is present in the composition in an amount of from 0.05 (such as 0.1, 0.2, 0.3, 0.4, 0.5, 0.6, 0.7, 0.8, 0.9, 1, 2, 3, or 4) to 10 (such as 9, 8, 7, 6, or 5) percent by weight based on the total dry weight of the composition. In certain embodiments, the rheology modifier comprises at least one of alkali swellable emulsions, hydrophobically modified alkali swellable emulsions, nonionic high-molecular-weight associative thickeners (e.g., hydrophobically modified polyethers, poly(ethylene oxide), poly(vinyl alcohol)), hydrophobically modified polyurethanes (HEUR) or cellulosics (e.g., hydroxyethyl cellulose, carboxymethyl cellulose, hydroxypropyl cellulose, hydroxypropyl methyl cellulose).

In certain embodiments, the composition further comprises a defoamer. In certain embodiments, the defoamer is present in the composition in an amount of from 0.005 (such as 0.01, 0.05, 0.1, 0.2, 0.3, 0.4, or 0.5) to 1 (such as 0.9, 0.8, 0.7, or 0.6) percent by weight based on the total dry weight of the composition. In certain embodiments, the defoamer comprises at least one of silicones, long chain fatty acids or alcohols, poly(ethylene oxide)/poly(propylene oxide) block copolymers, poly(alkyl acrylate)s, or emulsified oils (mineral or vegetable).

In addition to the above-mentioned adjuvants, one or more of the following auxiliary additives may also be added to the compositions described herein: preservatives (such as antimicrobials, algaecides, bactericides, and/or fungicides), stabilizers (such as antioxidants, UV absorbers, and/or anti-hydrolysis agents), solvents, coalescents, plasticizers, humectants, scratch-resistance agents, scrub-resistance agents, mar-resistance agents, antistatic agents, fragrances, aromatic chemicals, colorants, crosslinking agents, anti-foaming agents, flow agents, levelling agents, fluorescent agents, whitening agents, optical brighteners, hydrophobing agents, water-repellent agents, surface modifiers (such as waxes, anti-blocking agents, and/or release agents), slip control agents, pH buffers, coupling agents, adhesion promoters, and wetting agents.

In certain embodiments, the composition qualifies for indirect food contact under relevant United States Food and Drug Administration regulations.

Also provided are methods of coating a substrate comprising: providing the composition of any of the embodiments described above; and coating the composition onto a substrate. In certain embodiments, said coating step is performed via gravure coating, reverse gravure coating, knife coating, knife-over-roll coating, rotary screen coating, kiss coating, curtain coating, slide hopper coating, x-hopper coating, slot-die coating, Mayer rod coating, spin coating, digital coating, inkjet coating, or spray coating.

Also provided are methods of printing comprising: performing the method(s) of the embodiments described above; and printing an ink composition onto the coating (e.g., the coated substrate).

In certain embodiments, the methods may further comprise drying the coating on the substrate prior to said printing.

In certain embodiments, the methods may further comprise curing the ink composition on the coating subsequent to said printing. In certain embodiments, wherein said curing comprises thermal curing, electron-beam-curing (EB-curing), or UV-curing.

In certain embodiments, the methods may further comprise drying the ink composition on the coating subsequent to said printing.

In certain embodiments, the methods may further comprise overprinting a material over the ink composition, subsequent to said printing.

In certain embodiments, the methods may further comprise laminating a film-like or sheet-like material over the ink composition, subsequent to said printing.

### DETAILED DESCRIPTION

Various preferred features and embodiments will be described below by way of non-limiting illustration.

The amount of each chemical component described herein is presented exclusive of any solvent or diluent oil, which may be customarily present in the commercial material, that is, on an active chemical basis, unless otherwise indicated. However, unless otherwise indicated, each chemical or composition referred to herein should be interpreted as being a commercial grade material which may contain the isomers, byproducts, derivatives, and other such materials which are normally understood to be present in the commercial grade.

It is known that some of the materials described herein may interact in the final formulation, so that the components of the final formulation may be different from those that are initially added. For instance, metal ions (of, e.g., a detergent) may migrate to other acidic or anionic sites of other molecules. The products formed thereby, including the products formed upon employing the present coating compositions in its intended use, may not be susceptible of easy description. Nevertheless, all such modifications and reaction products are included within the scope of the present subject matter; the present subject matter encompasses the composition prepared by admixing the components described above.

As used herein, the term "about" means that a value of a given quantity is within ±20% of the stated value. In other embodiments, the value is within ±15% of the stated value. In other embodiments, the value is within ±10% of the stated value. In other embodiments, the value is within ±5% of the stated value. In other embodiments, the value is within ±2.5% of the stated value. In other embodiments, the value is within ±1% of the stated value. In other embodiments, the value is within a range of the explicitly-described value which would be understood by those of ordinary skill, based on the disclosures provided herein, to perform substantially similarly to compositions including the literal amounts described herein.

As used herein, the term "substantially" means that a value of a given quantity is within ±10% of the stated value. In other embodiments, the value is within ±5% of the stated value. In other embodiments, the value is within ±2.5% of the stated value. In other embodiments, the value is within ±1% of the stated value.

As used herein, the term "substantially free of" means that a component does not include any intentional addition of the material which the component is "substantially free of". For example, the component may include a material which the component is "substantially free of" at no more than impurity levels, which may be the result of incomplete chemical reactions and/or unintended/undesired (but perhaps unavoidable) reaction products.

As used herein, the transitional term "comprising," which is synonymous with "including," "containing," or "characterized by," is inclusive or open-ended and does not exclude additional, un-recited elements or method steps. However, in each recitation of "comprising" herein, it is intended that the term also encompass, as alternative embodiments, the phrases "consisting essentially of" and "consisting of," where "consisting of" excludes any element or step not specified and "consisting essentially of" permits the inclusion of additional un-recited elements or steps that do not materially affect the essential or basic and novel characteristics of the composition or method under consideration.

As used herein, the phrase "number-average molecular weight" (*M*ₙ) means the total weight of all the polymer molecules in a sample, divided by the total number of polymer molecules in a sample. Number-average molecular weight may be measured according to known methods. For example, gel permeation chromatography (GPC) may be used to measure number-average molecular weight. The sample preparation conditions should be chosen such that the polymer will not degrade, which would change the measured molecular weight.

An exemplary GPC method is performed using a high-temperature GPC system (Agilent PL-GPC 220 with refractive index detector), with the following conditions: columns: PLgel Mixed-B 10 um 300 x 7.5 mm (2 sets) with PLgel Guard 50 x 7.5 mm; column temperature: 100 °C; flow rate: 1.0 ml/min; injection volume: 200 µl; mobile phase: 0.02 M NaNO₃ and 250 ppm BHT in N,N'-dimethylacetamide (DMAc), 99.96% (OmniSolv^{®} from MilliporeSigma). Sample preparation: 0.04 gram of the sample is weighed in a 1 oz bottle. DMAc mobile phase (6.5 ml) is added in the sample bottle. The solution is placed on the shaker overnight. Then, it is placed into an oven at 100 °C for 2 hours. The sample solution is filtered through 0.45 um PTFE disposable syringe filter into autosampler vial. The molecular weight averages of the polymers are calculated based on polystyrene standards (Agilent EasiVial PS GPC/SEC Calibration Standard Kit with molecular weight range from 162 to 6,570,000).

It is known to those of skill in the polymer sciences that a polymer is a chemical compound or mixture of compounds formed by polymerization and including repeating structural units. In the simplest case of polyethylene, the polymer is comprised of repeating CH₂ groups forming a linear polymer terminated by CH₃ groups (referred to as terminal groups or end groups). Often, polymers may have branching points off of the main or linear chain of the polymer, which may be referred to as side chains or tethered chains. As the number of branching points and/or the length of the side chains increase, it may become difficult to define which portions of the polymer form the main chain of the polymer, and which form the side chains of the polymer.

Therefore, as used herein, the term "main chain" or "main-chain" refers to that portion of the polymer which forms the longest path (*i.e*., the highest number of atoms bonded together to form a linear polymer backbone) from one end group to another, without passing through the same monomeric unit twice. The ends of this main chain are thus considered to be the end groups or terminal groups of the polymer. Any monomeric units or polymer segments which branch off of the main chain are thus considered to individually be a "side chain" or "side-chain". End groups of the side chains are simply considered side-chain end groups, and are not considered terminal groups or end groups of the polymer as a whole.

Occasionally, a side chain may branch into two identical arms or side-chain end groups. In these cases, it does not matter which group is referred to as the side-chain end group in view of symmetry considerations; alternatively, both groups of the branch may be combined and designated as a double-tailed side-chain end group.

Star shaped polymers and dendrimers present an interesting case when they have perfect spherical symmetry. In these cases, the above definitions are applied to a single arm which emanates from the core; the rest of the arms, combined, constitute the end group for the selected arm.

The ink-receptive coating compositions of the present disclosure comprise water as an aqueous carrier. The coating composition also comprises at least one anionic polyurethane dispersion, wherein, in certain embodiments, the anionic polyurethane(s) have a number-average molecular weight of at least 10,000 g/mol. In certain embodiments, the anionic polyurethane(s) may have a number-average molecular weight of at least 3,000 g/mol, such as at least 5,000 g/mol. The anionic polyurethane dispersion may be present in the coating composition in an amount ranging from about 5% to about 60% active polymer by weight. The coating composition further comprises at least one aqueous solution nonionic polyurethane, wherein, in certain embodiments, the nonionic polyurethane has a number-average molecular weight of at most 30,000 g/mol. The aqueous solution nonionic polyurethane may be present in the coating composition in an amount ranging from about 1% to about 50% active polymer by weight. The ratio of the anionic polyurethane dispersion to aqueous solution nonionic polyurethane may be adjusted in order to achieve the desired ink receptivity on a given substrate, to affect adhesion of the coating to the substrate, to improve abrasion resistance of the coating, and/or to provide a desired coefficient of friction. In one embodiment, the ratio of anionic polyurethane dispersion to aqueous solution nonionic polyurethane may range from about 25:1 to about 1:15. In one embodiment, when the ink (such as digital ink) being applied to the ink-receptive coating comprises non-aqueous, UV-curable acrylate and/or urethane monomers and/or oligomers, the ratio of anionic polyurethane dispersion to aqueous solution nonionic polyurethane may range from about 25:1 to 1:1.

The anionic polyurethane is a polyurethane dispersion in water, in certain embodiments comprising a dispersion of distinct particles in water. In certain embodiments, the anionic polyurethane is the reaction product of a polyisocyanate (such as a diisocyanate), a polyol, and an acid-functional polyol, to form an oligomeric pre-polymer having terminal isocyanate groups. The oligomeric pre-polymer is chain extended with a short-chain diamine (for example, hydrazine and/or ethylenediamine). In certain embodiments, ethylenediamine may be desired as the chain extender to enable the urethane to comply with regulations regarding indirect food contact, such as relevant United States Food and Drug Administration regulations regarding indirect food contact. The above embodiments describe a well-known prepolymer process of making polyurethanes; other processes known to those of skill in the art may also be used to make the desired polyurethanes.

There are many options for the polyisocyanates (such as diisocyanates), and many of the commonly used diisocyanates may be used to make the anionic polyurethane. In certain embodiments, the diisocyanate is aliphatic, araliphatic or cycloaliphatic, as urethanes made from aromatic diisocyanates may yellow with exposure to natural elements in the use of the product, which may be undesirable in certain products.

There are many options for the polyol, such as commonly used polyester, polyether and/or polycarbonate polyols, such as diols.

The acid-functional polyol may be selected, and/or the amount of the acid-functional polyol may be selected, in order to provide a colloidally stable urethane dispersion. In certain embodiments, the acid-functional polyol may contain a carboxylic acid, sulfonic acid or phosphonic group. The acid group may be neutralized by means of an organic and/or inorganic base such that the resulting urethane resin particles are stabilized by an anionic charge.

In certain embodiments, the anionic polyurethane may be externally plasticized, such as by one or more benzoate esters. In certain embodiments, the anionic polyurethane may be synthesized in the presence of a cosolvent for the polyurethane. Non-limiting examples of suitable cosolvents include N-methylpyrrolidone (NMP), 2-pyrrolidone, or dimethyl ether cosolvents (such as dipropylene glycol dimethyl ether), which may be more favorable than cyclic amides for compliance with indirect food contact and/or other regulations.

Examples of polyurethanes suitable as the anionic polyurethane dispersion include, but are not limited to, Sancure^{™} 899, Sancure^{™} 898, Sancure^{™} 777, Sancu-re^{™} 861, Sancure^{™} 825, Sancure^{™} 815, Sancure^{™} 20025F, and/or Sancure^{™} 20041, all of which are available from Lubrizol Advanced Materials, Inc. Exemplary anionic polyurethane dispersions which may be suitable for use in the subject compositions are described in US 3,539,483.

The nonionic polyurethane of the present coating compositions is distinctly different from the anionic polyurethanes described herein. The nonionic polyurethane may be synthesized with a significant amount of nonionic diol comprising a long poly(ethylene oxide) chain. In this context, "significant amount" may mean enough nonionic diol to allow the polymer to be water soluble at a concentration of greater than 10% by weight, such as greater than 20%, 30%, 40% or 50% by weight. In this context, "long poly(ethylene oxide) chain" may mean from about 5 ethylene oxide units to about 200 ethylene oxide units in the chain. In certain embodiments, the nonionic polyurethane exists as a water-soluble resin in aqueous or solvent carrier, or in bulk. The amount of nonionic diol in the nonionic polyurethane may be adjusted to modulate the hydrophilic characteristics of the polyurethane. Non-limiting examples of suitable commercially available nonionic diols are Ymer^{™} N180 diols from Perstorp Holding AB, and Tegomer^{®} D-3403 diols from Evonik. In certain embodiments, the Tegomer^{®} D-3403 diols may be desired for their possible compliance with indirect food contact regulations.

The nonionic polyurethane contributes to the adhesion of the subject coating compositions and has the additional benefit of modulating the surface properties of the coating, such that two surfaces coated with the coating compositions(s) may not readily slide past one another. Exemplary nonionic polyurethanes which may be suitable for use in the subject compositions are described in US 8,664,331 B2, US 6,897,281 B2, and US 2019/0194485 A1.

Adjusting the ethylene oxide monomeric unit content of the nonionic polyurethane will modulate the hydrophilic characteristics of the polyurethane. For example, an ethylene oxide monomeric unit content of at least about 20% (such as not less than 50%) by weight, based on the total weight of the polyurethane, may render the nonionic polyurethane soluble in water. For example, the nonionic polyurethane may comprises from 35% to 90% by weight ethylene oxide monomeric units, based on the total weight of the polyurethane. Furthermore, nonionic polyurethanes having ethylene oxide side-chain units in an amount of 12% to 80% by weight, based on the total weight of the polyurethane, may be desirable for certain applications. In certain embodiments, it may be desirable to limit the amount of ethylene oxide main-chain units to an amount of less than 25% by weight, based on the total weight of the polyurethane. In certain embodiments, poly(ethylene oxide) side chains may be desirable, in that they may prevent the polyurethane from swelling to an undesirable degree in water, which may cause undesirably high viscosity. Furthermore, poly(ethylene oxide) side chains may provide a polyurethane which may provide a coating composition with a desirable static coefficient of friction compared to polyurethanes which have ethylene oxide units only in the backbone of the polyurethane.

The ink-receptive coatings may optionally contain inorganic pigment filler particles. The inorganic pigment filler particles may contribute to ink receptivity and/or contribute to the durability of the ink-receptive coating. The inorganic pigment filler particles may be compatible with the polyurethane(s) present in the compositions, and may be present in the coating composition in amounts from about 0% to about 50% active inorganic pigment by weight. Examples of useful inorganic pigment particles include: titanium dioxide, calcium carbonate, silica particles, clay particles, and mixtures thereof. In one embodiment, the inorganic pigment particle is a kaolin clay particle. The particle size of the inorganic pigment particles is not particularly limiting, and may range from about 0.1 to about 20 microns in diameter.

The inorganic pigment particles may be introduced to the coating composition in the form of a pigment dispersion. In one embodiment, the inorganic pigment particles have a nonionic or anionic charge on the surface of the particle to achieve colloidal stability in the coating compositions. The inorganic pigment particles may be dispersed with a dispersant to improve their colloidal stability in the coating composition, and/or to achieve compatibility with polyurethane resins and additional additives such as, rheology modifiers which may be present in the coating composition. In one embodiment, the dispersant chemistry for the inorganic pigment is selected from nonionic and/or anionic stabilization chemistry.

In certain embodiments, the inorganic pigment and any associated dispersant chemistry qualifies for indirect food contact under relevant United States Food and Drug Administration regulations.

In certain embodiments, the ratio of inorganic pigment filler particles to total polyurethane content of the compositions ranges from about 1.5:1 to about 0.1:1, such as from about 1.5:1 to about 0.5:1.

The solids content of the coating compositions may be adjusted to achieve a desired target add-on amount of the wet coating composition. Total solids content of the coating compositions may range from about 5 percent to about 60 percent solids, based on the total weight of the composition. The solids content of the coating compositions may contribute to the rheological properties of the coating and may be adapted to the specific coating application method. Higher solids content may be desirable to allow for a single pass by the application method in order to achieve the target add-on amount.

In certain embodiments, it may be desirable to modify the rheological properties of the coating composition with a rheology modifier. The rheology modifier may be selected in order to achieve a Newtonian, shear thinning or shear thickening rheology. Any known rheology modifying chemistries are contemplated as options to adjust the rheology of the coating composition. Suitable rheology modifiers may be selected from, for example, alkali swellable emulsions, hydrophobically modified alkali swellable emulsions, nonionic high-molecular-weight associative thickeners (hydrophobically modified polyethers, poly(ethylene oxide), poly(vinyl alcohol)), hydrophobically modified polyurethanes (HEUR), cellulosics (hydroxyethyl cellulose, carboxymethyl cellulose, hydroxypropyl cellulose, hydroxypropyl methyl cellulose), or suitable mixtures thereof. In one embodiment, the rheology modifier is a hydrophobically modified polyurethane (HEUR) type thickener, which may be desirable due to their compatibility with the polyurethane(s) present in the coating compositions. In another embodiment, the rheology modifier is present in the coating composition in an amount ranging from about 0.05 to about 10% active thickener by weight, based on the total dry weight of the coating composition.

The target viscosity of the coating may depend on the desired shear rate of the particular application method. In certain embodiments, the viscosity of the coating may range between about 50 and 500 centipoise at 25 °C, and/or may demonstrate a Newtonian profile over shear rates from about 1 reciprocal second to about 1000 reciprocal seconds. In one embodiment, the rheology modifier qualifies for indirect food contact under relevant United States Food and Drug Administration regulations.

The application method of the ink-receptive coating to a substrate is not particularly limited, such that the coating may be applied to the target substrate by any coating method known to those skilled in the art. Examples of useful coating methods include, but are not limited to: gravure coating, reverse gravure coating, knife coating, knife-over-roll coating, rotary screen coating, kiss coating, curtain coating, slide hopper coating, x-hopper coating, slot-die coating, Mayer rod coating, spin coating, digital coating, ink jet coating, or spray coating. The coating method may determine the wet add-on amount of the subject ink-receptive coating(s) and/or the required rheological profile of the coating composition. In one embodiment, the coating composition is applied to the target substrate using a gravure cylinder. The cell volume of the engraved gravure cylinder may be designed to deliver wet coating add-on amounts ranging from about 4 to 30 BCM (billion cubic microns). The desired wet add-on amount may depend on the percent solids of the coating composition and/or the design of cell volume of cylinder in order to achieve a desired dry coating thickness. In certain embodiments, the coating thicknesses of the dry coating composition may range from 0.5 grams per square meter to about 5 grams per square meter. It may be desirable to add a minimum thickness of dry coating to achieve the desired performance of the coating composition from a cost perspective. The ink-receptive coating may be applied in a separate, off-line, coating step or applied as an in-line coating that is part of the printer. Various drying techniques may be employed to assist in drying the ink-receptive coating as part of the in-line printing process prior to application of the printing ink and may include thermal and/or infrared driers.

Application methods for delivering the ink-receptive coating composition to the target substrate may be conducted at high application speeds. Application speeds in the range of 40 to 80 meters per minute may be encountered during typical application methodologies. These high application speeds may result in foaming of the wet ink-receptive coating composition. To address this, defoamers and/or anti-foamers may be added to the ink-receptive coating composition. (As used herein "defoamers" should be understood to include defoamers and/or anti-foamers, unless context dictates otherwise.) Any of the known defoamer chemistries may be considered for the coating composition and may be added in any amount necessary to defoam the coating at high coating speeds without negatively impacting the coating, such as in the form of fisheyes, repellencies or pinholing. Classes of defoamer chemistries useful in the present ink-receptive coating composition include, but are not limited to silicones, long chain fatty acids or alcohols, poly(ethylene oxide)/poly(propylene oxide) block copolymers, poly(alkyl acrylate)s, and/or emulsified oils (mineral or vegetable). Blends of different defoamer classes may be used to defoam the ink-receptive coating composition and may be combined with fine inorganic pigment particles such as silicas. In one embodiment, the defoamer is present in the coating composition in an amount between 0.005 to 1% active defoamer by dry weight of the coating composition.

The ink-receptive coating may be useful to prime and/or coat any substrate, including but not limited to: paper, textiles, nonwovens, and polymeric films. In one embodiment, the target substrate to which the ink-receptive coating is applied is a corrugated board. The corrugated board may be an uncoated board, commonly known in the packaging marketplace as Kraft or Brown board. In another embodiment, the corrugated board may have a coating on at least one of its surfaces. The coated corrugated board may be pre-coated prior to the application of the subject ink-receptive coating. Corrugated boards that have a pre-coated surface may contain an inorganic filler particle, such as clay or calcium carbonate, and are known in the packaging marketplace as Mottle or Kemi board. The surface of the Kemi board is pretreated with a coating that may result in a higher image quality than Mottle board when printed with ink. As such, the various board types have differing degrees of porosity and the application amount of the subject ink-receptive coating in terms of dry add-on weight may differ for the various board types. It may be desirable that the dry ink-receptive coating composition imparts little to no color to the target substrate. In one embodiment, the dry ink-receptive coating composition is applied in an amount that results in a delta E of less than one unit as measured by the CIE Lab color measurement system.

Printing ink may be applied to the subject ink-receptive coatings by analog and/or digital printing methods. Examples of analog printing methods include gravure and rotary screen and may be water-based, solvent based, or actinic radiation curable. Printing ink may also be applied by digital means including inkjet printers utilizing either thermal or piezo electric drop ejection technologies. In the case of inkjet printers, the droplet ejection may be achieved by drop-on-demand or continuous inkjet methods.

In certain embodiments, the printing ink (such as digital printing ink) may be a water-based pigment ink that comprises a polymeric binder where the curing of the ink is accomplished by thermally drying the ink after the printing operation. In certain embodiments, the printing ink (such as digital printing ink) may be a water-based dye containing ink where the dye is dissolved in the aqueous ink vehicle. In certain embodiments, the printing ink (such as digital printing ink) may be a disperse dye containing ink that is printed to an intermediate, such as a transfer paper, followed by a thermal transfer step to the target substrate. In certain embodiments the printing may be a nonaqueous ink where the ink vehicle is a solvent or eco-solvent.

In certain embodiments, the printing inks (such as digital printing inks) comprise pigmented colorants dispersed in a carrier comprised of acrylic or urethane monomers or oligomers which are curable by actinic radiation such as, UV-curable or e-beam radiation. The UV-curable ink may also contain a photoinitiator. In the case of UV-curable inks, the ink may be radiation cured after printing to the ink-receptive coating by means of LED or lamps. UV curing lamps may be short or long wavelength and based on mercury vapor or mercury metal halide lamps. The UV-curable inks may also be based on water-based UV-curable ink technologies. Colored inks may include; cyan, magenta, yellow, black, red, blue, green, orange and violet. In certain embodiments, a white ink may be applied to the ink-receptive coating composition and then a colored ink may be applied to the white ink. Application of a white ink may be desirable when the target substrate is dark in color as is the case with uncoated corrugated board such as Kraft or Brown board.

### Examples

The subject matter disclosed herein is useful for coating/priming substrates for printing applications (such as digital printing applications), which may be better understood with reference to the following examples, which are set forth merely to further illustrate the subject matter disclose herein. The illustrative examples should not be construed as limiting the subject matter in any manner.

A series of inkjet inks, such as pigmented inks or pigmented UV-curable inks, were loaded into an inkjet printer having cyan, magenta, yellow, black and white pigments. When the pigmented UV-curable inks were used, the carrier in the UV-curable inks comprised a combination of acrylate, diacrylate and urethane acrylate monomers in combination with phosphine oxide photoinitiators.

A series of ink-receptive coating compositions were prepared according to the formulations described below. The ink-receptive coating compositions were applied by an engraved gravure cylinder delivering a wet add-on amount of 8 BCM in the case of Kemi boards and 16 BCM in the case of Mottle or Kraft boards. The calculated dry laydowns resulted in a coating application amount of approximately 1 to 2.5 grams per square meter ("gsm"). At these laydown amounts, the delta E between the unprimed board and primed coated board was less than one unit as measured by a Gretag-Macbeth Color I colorimeter, according to the CIELAB color measurement system. After application of the ink-receptive coating to the corrugated board, the primer coating was conveyed through a drier unit and dried at 50 degrees Celsius. Immediately after the drying operation, the UV-curable ink jet inks were jetted from the inkjet printheads onto the primer surface, followed by curing using an LED curing step.

### Example of anionic polyurethane dispersion (A-1):

The following materials were charged to a reactor equipped with a mechanical stirrer, thermocouple, and dry nitrogen flow: 1,210 grams hexane neopentyl adipate polyol with *Mₙ* ~ 1,000 g/mol (Piothane^{®} 67-1000 HNA from Panolam Industries International), 161 grams dimethylolpropanoic acid (DMPA^{®} from GEO^{®} Specialty Chemicals), 1,140 grams methylene-bis-(4-cyclohexylisocyanate) (Vestanat^{®} H12MDI from Evonik Industries), and 322 grams dipropylene glycol dimethyl ether (Proglyde^{™} DMM from Dow Chemical). The stirrer was then turned on, the mixture heated to 90 - 93 °C and stirred at this temperature for ~1.5 hours. The content of the remaining NCO was then measured using a titration with di-n-butylamine (Acros Organics) and 1.0*M* HCl (J. T. Baker) and was found to be 5.4% versus theoretical 5.5%. The prepolymer was cooled to about 80 °C, and 2,360 grams of it were charged with good mixing over 5 minutes to a vessel containing 3,690 DI water at 24 °C, 105 grams of 2-(dimethyl-amino)-ethanol (Merck KGaA), and 0.5 grams BYK-028 defoamer (BYK). The mixture was stirred at 34 °C for ~30 minutes. The dispersion was then chain-extended by adding over 20 minutes a solution of 78 grams ethylenediamine (TCI America) in 234 grams DI water. The dispersion was covered and mixed overnight. The grit-free final product filtered through a 100-micron filter without leaving any coagulum in the filter and had the following properties: solids content = 35.8% (at 80% power by microwave moisture analyzer CEM Smart 6^{™}); pH 8.7; Brookfield viscosity = 14 cP (spindle #3 at 10 RPM); particle size = 60 nm (Z-average, Malvern Zetasizer Nano - ZS)); Mₙ -31,000 g/mol with dispersity index -3.0 (by GPC).

### Example of aqueous solution of nonionic polyurethane (N-1):

The following materials were charged to a reactor equipped with a mechanical stirrer, thermocouple, and dry nitrogen flow: 1,870 grams polyether-1,3-diol (Tegomer^{®} D 3403 from Evonik Industries), 28 grams 1,1,1-tris(hydroxymethyl)propane (Sigma-Aldrich), 80 grams dimethylolpropanoic acid (DMPA^{®} from GEO^{®} Specialty Chemicals), 50 grams ethylene glycol (VWR International), 35 grams triethanolamine (MP Biomedicals), 1.5 grams pentaerythritol tetrakis(3,5-di-tert-butyl-4-hydroxyhydrocinnamate) (Sigma-Aldrich), and 740 grams methylene-*bis*-(4-cyclohexylisocyanate) (Vestanat^{®} H12MDI from Evonik Industries). The stirrer was then turned on, the mixture heated to 102 - 107 °C and stirred at this temperature for one hour. The content of the remaining NCO was then measured using a titration with din-butylamine (Acros Organics) and 1.0*M* HCl (J. T. Baker) and was found to be 0.8%. The prepolymer was cooled to about 90 °C, and 2,340 grams of it were charged with good mixing over 5 minutes to a vessel containing 4,890 DI water at 24 °C. The grit-free final product filtered through a 100-micron filter without leaving any coagulum in the filter and had the following properties: solids content = 33.3% (at 80% power by microwave moisture analyzer CEM Smart 6^{™}); pH 3.7; Brookfield viscosity = 260 cP (spindle #3 at 10 RPM)); Mₙ -10,000 g/mol with dispersity index -2.3 (by GPC).

### Example of aqueous solution of nonionic polyurethane with terminal poly(ethylene oxide) chains (N-2):

The following materials were charged to a reactor equipped with a mechanical stirrer, thermocouple, and dry nitrogen flow: 1,850 grams poly(ethylene glycol) methyl ether, average *Mₙ* = 750 (Sigma-Aldrich), 84 grams 1,1,1-tris(hydroxymethyl)propane (Sigma-Aldrich), 45 grams ethylene glycol (VWR International), 35 grams triethanolamine (MP Biomedicals), 1.3 grams pentaerythritol tetrakis(3,5-di-tert-butyl-4-hydroxyhydrocinnamate) (Sigma-Aldrich), and 790 grams methylene-*bis*-(4-cyclohexylisocyanate) (Vestanat^{®} H12MDI from Evonik Industries). The stirrer was then turned on, the mixture heated to 110 - 114 °C and stirred at this temperature for ∼1.5 hour and then at 120 - 124 °C for additional ~2 hours. The content of the remaining NCO was then measured using a titration with di-n-butylamine (Acros Organics) and 1.0M HCl (J. T. Baker) and was found to be 0.85%. The prepolymer was cooled to about 105 °C, and 2,300 grams of it were charged with good mixing over 5 minutes to a vessel containing 3,450 DI water at 37 °C. The grit-free final product filtered through a 100-micron filter without leaving any coagulum in the filter and had the following properties: solids content = 40% (at 80% power by microwave moisture analyzer CEM Smart 6^{™}); pH 7.6; Brookfield viscosity = 57 cP (spindle #3 at 20 RPM).

### Example of aqueous solution of nonionic polyurethane (N-3):

The following materials were charged to a reactor equipped with a mechanical stirrer, thermocouple, and dry nitrogen flow: 340 grams polyether-1,3-diol (Tegomer^{®} D 3403 from Evonik Industries), 60 grams poly(ethylene glycol) with Mₙ ~ 1,000 g/mol (BeanTown Chemical), 6 grams 1,1,1-tris(hydroxymethyl)propane (Sigma-Aldrich), 17 grams dimethylolpropanoic acid (DMPA^{®} from GEO^{®} Specialty Chemicals), 10 grams ethylene glycol (VWR International), 7.5 grams triethanolamine (MP Biomedicals), 0.3 grams pentaerythritol tetrakis(3,5-di-tert-butyl-4-hydroxyhydrocinnamate) (Sigma-Aldrich), and 160 grams methylene-bis-(4-cyclohexylisocyanate) (Vestanat^{®} H12MDI from Evonik Industries). The stirrer was then turned on, the mixture heated to 102 - 105 °C and stirred at this temperature for one hour. The content of the remaining NCO was then measured using a titration with din-butylamine (Acros Organics) and 1.0MHCl (J. T. Baker) and was found to be 0.5%. The prepolymer was cooled to about 90 °C, and 400 grams of it were charged with good mixing over 5 minutes to a vessel containing 780 DI water at 24 °C. The final product had the following properties: solids content = 34% (at 80% power by microwave moisture analyzer CEM Smart 6^{™}); pH 4.9; Brookfield viscosity = 120 cP (spindle #3 at 20 RPM).

### Example of aqueous solution of nonionic polyurethane (N-4):

The following materials were charged to a reactor equipped with a mechanical stirrer, thermocouple, and dry nitrogen flow: 405 grams poly(ethylene glycol) with Mₙ ~ 1,000 g/mol (BeanTown Chemical), 6 grams 1,1,1-tris(hydroxymethyl)propane (Sigma-Aldrich), 17 grams dimethylolpropanoic acid (DMPA^{®} from GEO^{®} Specialty Chemicals), 6 grams ethylene glycol (VWR International), 7.5 grams triethanolamine (MP Biomedicals), 0.3 grams pentaerythritol tetrakis(3,5-di-tert-butyl-4-hydroxyhydrocinnamate) (Sigma-Aldrich), and 160 grams methylene-*bis*-(4-cyclohexylisocyanate) (Vestanat^{®} H12MDI from Evonik Industries). The stirrer was then turned on, the mixture heated to 102 - 105 °C and stirred at this temperature for one hour. The content of the remaining NCO was then measured using a titration with di-n-butylamine (Acros Organics) and 1.0*M* HCl (J. T. Baker) and was found to be 0.5%. The prepolymer was cooled to about 90 °C, and 400 grams of it were charged with good mixing over 5 minutes to a vessel containing 880 DI water at 24 °C. The final product had the following properties: solids content = 29% (at 80% power by microwave moisture analyzer CEM Smart 6^{™}); pH 4.9; Brookfield viscosity = 1,500 cP (spindle #3 at 5 RPM).

EXAMPLE 1: An ink-receptive coating composition was prepared with the following components: to 3.4 grams of DI water was added: 59.5 grams of anionic polyurethane dispersion A-1, 14.3 grams of aqueous nonionic polyurethane N-1, 19.5 grams of a 66% dispersion of kaolin clay in DI water, 2.0 grams of Tafigel^{®} Pur 82(a 20% HEUR rheology modifier), 0.5 grams of Surfynol^{®} 355, 0.25 grams of Airase^{®} 4655, and 0.5 grams of Airase^{®} 5655. The ratio of polyurethane A-1 to N-1 was 2.4:1. The ratio of inorganic pigment to total polyurethane resin was 0.5:1.

EXAMPLE 2: An ink-receptive coating composition was prepared with the following components: to 11.3 grams of DI water was added: 45 grams of anionic polyurethane dispersion A-1, 10.8 grams of aqueous nonionic polyurethane N-1, 29.6 grams of a 66% dispersion of kaolin clay in DI water, 2.0 grams of Tafigel^{®} Pur 82(a 20% HEUR rheology modifier), 0.5 grams of Surfynol^{®} 355, 0.25 grams of Airase^{®} 4655, and 0.5 grams of Airase^{®} 5655. The ratio of polyurethane A-1 to N-1 was 4:1. The ratio of inorganic pigment to total polyurethane resin was 1:1.

EXAMPLE 3: An ink-receptive coating composition was prepared with the following components: to 13.5 grams of DI water was added: 41 grams of anionic polyurethane dispersion A-1, 9.8 grams of aqueous nonionic polyurethane N-1, 32.3 grams of a 66% dispersion of kaolin clay in DI water, 2.0 grams of Tafigel^{®} Pur 82(a 20% HEUR rheology modifier), 0.5 grams of Surfynol^{®} 355, 0.25 grams of Airase^{®} 4655, and 0.5 grams of Airase^{®} 5655. The ratio of polyurethane A-1 to N-1 was 4:1. The ratio of inorganic pigment to total polyurethane resin was 0.5:1.

EXAMPLE 4: An ink-receptive coating composition was prepared with the following components: to 14.7 grams of DI water was added: 67.0 grams of anionic polyurethane dispersion A-1, 14.5 grams of aqueous nonionic polyurethane N-1, 3 grams of Aquaflow^{®} NMS-450 (29% nonionic polyether rheology modifier), 0.25 grams of Surfynol^{®} DF-37(defoamer) and 0.5 grams of BYK^{®}-16(defoamer).

EXAMPLE 5: An ink-receptive coating composition was prepared with the following components: to 14.1 grams of DI water was added: 47 grams of anionic polyurethane dispersion A-1, 4.2 grams of aqueous nonionic polyurethane N-2, 33.1 grams of a 66% dispersion of kaolin clay in DI water, 1.5 grams of Tafigel^{®} Pur 82 (a 20% HEUR rheology modifier), and 0.1 grams of Agitan^{®} 351 defoamer. The ratio of polyurethane A-1 to N-2 was 10.9:1. The ratio of inorganic pigment to total polyurethane resin was 1.2:1.

EXAMPLE 6: An ink-receptive coating composition was prepared with the following components: to 25.5 grams of DI water was added: 34 grams of anionic polyurethane dispersion A-1, 10.43 grams of aqueous nonionic polyurethane N-2, 28.77 grams of a 66% dispersion of kaolin clay in DI water, 1.2 grams of Tafigel^{®} Pur 82 (a 20% HEUR rheology modifier), and 0.1 grams of Agitan^{®} 351 defoamer. The ratio of polyurethane A-1 to N-2 was 3.33: 1. The ratio of inorganic pigment to total polyurethane resin was 1.2:1.

EXAMPLE 7: An ink-receptive coating composition was prepared with the following components: to 0.69 grams of DI water was added: 75.00 grams of anionic polyurethane dispersion A-1, 23.01 grams of aqueous nonionic polyurethane N-1, 1.2 grams of Tafigel^{®} Pur 82 (a 20% HEUR rheology modifier), and 0.1 grams of Agitan^{®} 351 defoamer. In this example, no inorganic pigments were used.

EXAMPLE 8: An ink-receptive coating composition was prepared with the following components: to 0.22 grams of DI water was added: 75.00 grams of anionic polyurethane dispersion A-1, 23.48 grams of aqueous nonionic polyurethane N-2, 1.2 grams of Tafigel^{®} Pur 82 (a 20% HEUR rheology modifier), and 0.1 grams of Agitan^{®} 351 defoamer. In this example, no inorganic pigments were used.

EXAMPLE 9: An ink-receptive coating composition was prepared with the following components: to 0.13 grams of DI water was added: 72.00 grams of anionic polyurethane dispersion A-1, 26.57 grams of aqueous nonionic polyurethane N-3, 1.2 grams of Tafigel^{®} Pur 82 (a 20% HEUR rheology modifier), and 0.1 grams of Agitan^{®} 351 defoamer. In this example, no inorganic pigments were used.

EXAMPLE 10: An ink-receptive coating composition was prepared with the following components: to 23.4 grams of DI water was added: 34 grams of anionic polyurethane dispersion A-1, 12.5 grams of aqueous nonionic polyurethane N-3, 28.8 grams of a 66% dispersion of kaolin clay in DI water, 1.2 grams of Tafigel^{®} Pur 82 (a 20% HEUR rheology modifier), and 0.1 grams of Agitan^{®} 351 defoamer.

EXAMPLE 11: An ink receptive coating composition was prepared with the following components: to 29.6 grams of DI water was added: 16.7 grams of anionic polyurethane dispersion A-1, 16.7 grams of aqueous nonionic polyurethane N-1, 35.4 grams of a 66% dispersion of kaolin clay in DI water, 1.5 grams of Tafigel^{®} Pur 82 (a 20% HEUR rheology modifier), and 0.1 grams of Agitan^{®} 351 defoamer.

EXAMPLE 12: An ink receptive coating composition was prepared with the following components: to 29.8 grams of DI water was added: 11.1 grams of anionic polyurethane dispersion A-1, 22.2 grams of aqueous nonionic polyurethane N-1, 35.4 grams of a 66% dispersion of kaolin clay in DI water, 1.5 grams of Tafigel^{®} Pur 82 (a 20% HEUR rheology modifier), and 0.1 grams of Agitan^{®} 351 defoamer.

COMPARATIVE EXAMPLE 1: An ink receptive coating composition was prepared with the following components: to 23.04 grams of DI water was added: 34.0 grams of Carbobond 7424 (Acrylic emulsion), 9.3 grams of aqueous nonionic polyurethane N-1, 30.4 gram a 66% dispersion of kaolin clay in DI water, 3.0 grams of Tafigel^{®} Pur 82(a 20% HEUR rheology modifier) and 0.25 grams of 10% solution of Agitan^{®} 351 (defoamer). Substituting acrylic emulsion in for the anionic polyurethane dispersion, A-1, gave poor image quality.

COMPARATIVE EXAMPLE 2: An ink-receptive coating composition was prepared with the following components: to 1.40 grams of DI water was added: 97.30 grams of anionic polyurethane dispersion A-1, 1.2 grams of Tafigel^{®} Pur 82(a 20% HEUR rheology modifier), and 0.1 grams of Agitan^{®} 351 defoamer. In this comparative example, no nonionic polyurethane and inorganic pigment were used.

COMPARATIVE EXAMPLE 3: An ink-receptive coating composition was prepared with the following components: to 25.56 grams of DI water was added: 44.30 grams of anionic polyurethane dispersion A-1, 28.84 gram a 66% dispersion of kaolin clay in DI water, 1.2 grams of Tafigel^{®} Pur 82 (a 20% HEUR rheology modifier), and 0.1 grams of Agitan^{®} 351 defoamer. In this comparative example, no nonionic polyurethane N-2 was used.

### Evaluation of Printing Results

The ink-receptive coated corrugated boards printed with UV-curable inks were evaluated for several performance attributes and assigned a performance metric as described below.

An image quality rating was assigned to each printed image according to the following ranking:
1. Image shows good dot gain results in imaged areas with little to no coalesce, colors do not bleed into unprinted areas and are essentially free of defects such as pinholes, fisheyes and dark spots.
2. Images shows moderate amounts of coalescence that degrades image sharpness, colors show moderate amounts of bleed into unprinted areas, or show moderate numbers of pinholes, fisheyes, or dark spots.
3. Images shows excessive amounts of coalescence that results in poor image sharpness, bleeds severely into unprinted areas, or shows excessive numbers of pinholes, fisheyes, or dark spots.

The coating compositions of certain examples described above were coated onto certain corrugated boards as described above, and are summarized in Table 1 below. Table 1 reports the image quality metrics for these ink-receptive coatings printed with UV-curable inks.

**Table 1**

| Example | Image Quality Metric: Kemi | Image Quality Metric: Mottle |
|---|---|---|
| Example 1 | 1 | 1 |
| Example 2 | 1 | 1 |
| Example 3 | 1 | 1 |
| Example 4 | 2 | - |
| Example 5 | 1 | 1 |
| Comp. Ex. 1 | 3 | 3 |

Table 1 demonstrates that the combination of an anionic polyurethane dispersion and a nonionic solution polyurethane provides a high degree of image quality as primer on coated boards, such as Kemi or Mottle. Good image quality may be achieved with inorganic filler present (Examples 1-3 and 5) and also without an inorganic filler (Example 4). Comparative Example 1 shows that the use of an acrylic-polymer-based ink-receptive coating, instead of a urethane-based ink-receptive coating, for UV-curable inks on film substrates, does not deliver good image quality on corrugated boards.

### Sliding Angle of Primer-to-Primer Surface

Coating formulations were coated on Kemi corrugated boards via a small gravure hand proof applicator equipped with a 16 BCM anilox, then dried in a convection oven at 65 °C for 5 min. The dry coat weight for the coated primers was measured at about 2 gsm.

The primer-on-primer coated boards sliding property was tested using the ANSI Tappi method T815 om-12. Four consecutive runs were run for each primer formulation tested and the sliding angle values were averaged. Table 2 reports the sliding angle testing for ink-receptive coatings on Kemi boards. Via comparison of Example 6 against Comp. Ex. 2 and comparison of Example 7 against Comp. Ex. 3, the information in Table 2 demonstrates that the combination of anionic polyurethane dispersion with aqueous nonionic polyurethane provides a high sliding angle that is desirable to prevent the primer to primer surface from sliding past one another.

**Table 2**

| Example | Sliding Angle Metric: Kemi | Key Formulation Components |
|---|---|---|
| Comp. Ex. 2 | 29.5 | anionic dispersion A-1 |
| Example 6 | 40.5 | anionic dispersion A-1, non-ionic solution N-1 |
| Comp. Ex. 3 | 27.0 | anionic dispersion A-1, Kaolin clay |
| Example 7 | 30.5 | anionic dispersion A-1, non-ionic solution N-1, Kaolin clay filler |

### Water-based ink resin (R-1):

The following materials were charged to a reactor equipped with a mechanical stirrer, thermocouple, and dry nitrogen flow: 360 grams polyether-1,3-diol (Tegomer^{®} D 3403 from Evonik Industries), 104 grams hexane adipate isophthalate polyol with Mₙ ~ 500 g/mol (Piothane^{®} 70-500 HAI from Panolam Industries International), 21 grams dimethylolpropanoic acid (DMPA^{®} from GEO^{®} Specialty Chemicals), 0.4 grams pentaerythritol tetrakis(3,5-di-tert-butyl-4-hydroxyhydrocinnamate) (Sigma-Aldrich), and 315 grams methylene-bis-(4-cyclohexylisocyanate) (Vestanat^{®} H12MDI from Evonik Industries). The stirrer was then turned on, the mixture heated to 105 - 110 °C and stirred at this temperature for one hour. The content of the remaining NCO was then measured using a titration with di-n-butylamine (Acros Organics) and 1.0 *M* HCl (J. T. Baker) and was found to be 4.7%. The prepolymer was cooled to about 90 °C, and 650 grams of it were charged with good mixing over 5 minutes to a vessel containing 1,550 grams DI water and 0.7 grams BYK-028 defoamer (BYK) at 26 °C. The mixture was stirred at 30 °C for three hours. The dispersion was then chain-extended by adding 8 grams ethylenediamine (TCI America). The dispersion was covered and mixed overnight. The final product had the following properties: solids content = 30% (at 80% power by microwave moisture analyzer CEM Smart 6^{™}); pH 5.1; Brookfield viscosity = 1,800 cP (spindle #6 at 2 RPM); particle size < 40 nm (Z-average, Malvern Zetasizer Nano - ZS).

### Printing of water-based pigment ink onto subject ink-receptive coating

A water-based pigmented ink was prepared by combining: 41.4 grams of deionized water, grams of a 29.9 grams of a 14% carbon black pigment dispersion in water, 11.9 grams of resin R-1, 1.4 grams of a 35% high density polyethylene wax dispersion, 7 grams of propylene glycol, 7 grams of glycerin, 0.02 grams of Acticide^{®} MBS biocide, 0.7 grams of Surfynol^{®} 440 and 0.165 grams of BYK^{®} 3455 surfactants. The ink was loaded into an Epson DX-5 piezo printhead and jetted from the printhead onto a Mottle corrugated board coated with 2.5 gsm of dry coating applied from the ink-receptive coating of Example 1. The resulting dark black printed image was loaded into a Sutherland rub tester using a 4-pound sled weight where a sheet of Copy Paper was abraded for 100 cycles on the solid imaged area. No visibly detectable amount of printed image was transferred to the copy sheet, thereby demonstrating excellent abrasion resistance.

Additional primed Mottle corrugated boards were prepared for printing with the above described waterborne pigmented ink by applying a series of ink-receptive coatings at a wet laydown of 16 BCM using an anilox roller. The resulting primed boards were printed as solid black color blocks with the herein described water-based pigment ink using the Epson DX-5 printhead and air dried for 3 hours before examination of the printed area. An image quality rating was assigned to the printed area according the following 1 to 3 rating scale for ink coalescence:
1. Image shows little to no coalesce and is essentially free of defects such as pinholes, fisheyes and dark spots.
2. Image shows moderate amounts of coalescence that degrades image sharpness.
3. Image shows excessive amounts of coalescence that results in poor image sharpness.

The resulting black solid block images were also read for their Lightness, L*, using a Color I Colorimeter. The lower the L* reading indicating a darker image. Table 3 reports printing results of water-based pigment inks on various ink-receptive coatings.

**Table 3**

| Example | Ink-Receptive Coating Components | L* of Black Image | Coalescence Rating |
|---|---|---|---|
| Comp. Ex. 2 | Polymer A-1 | 28.5 | 3 |
| Example 7 | Polymers A-1 and N-1 | 29.3 | 1 |
| Example 8 | Polymers A-1 and N-2 | 29.5 | 1 |
| Example 9 | Polymers A-1 and N-3 | 29.2 | 2 |
| Example 1 | Polymers A-1, N-1 and clay | 30.7 | 2 |
| Example 5 | Polymers A-1, N-2 and clay | 30.8 | 2 |
| Example 10 | Polymers A-1, N-3 and clay | 30.5 | 2 |
| Comp. Ex.3 | Polymer A-1 only and clay | 33.9 | 3 |

Table 3 illustrates the benefit of both anionic polyurethane dispersion and aqueous nonionic solution polymers in achieving an image with good coalescence when printing with a water-based pigment ink. In the absence of clay, the aqueous nonionic solution polymers with poly(ethylene oxide) side chains of these examples show improved image coalescence and result in dark images.

Ink receptive coating examples 11 and 12 were applied to Kraft paper at approximately 3.8 grams per square meter and dried prior to printing. The resulting coated substrates were loaded into an Epson C-82 desktop printer equipped with cyan, magenta, yellow and black pigment inks and printed. The resulting images showed good image quality and black L* readings of the solid black squares were 25.8 for Example 11 and 25.5 for Example 12.

The mention of any document is not an admission that such document qualifies as prior art or constitutes the general knowledge of the skilled person in any jurisdiction. Except in the Examples, or where otherwise explicitly indicated or required by context, all numerical quantities in this description specifying amounts of materials, reaction conditions, molecular weights, number of carbon atoms, and the like, are to be understood as modified by the word "about". It is to be understood that the upper and lower amount, range, and ratio limits set forth herein may be independently combined, and that any amount within a disclosed range is contemplated to provide a minimum or maximum of a narrower range in alternative embodiments (with the proviso, of course, that the minimum amount of a range must be lower than the maximum amount of the same range). Similarly, the ranges and amounts for each element may be used together with ranges or amounts for any of the other elements.

While certain representative embodiments and details have been shown for the purpose of illustrating the subject matter, it will be apparent to those skilled in this art that various changes and modifications may be made therein without departing from the scope of the subject matter. In this regard, the scope of the invention is to be limited only by the following claims.

## Claims

1. An ink-receptive coating composition comprising:
a. an aqueous anionic polyurethane dispersion; and
b. an aqueous solution of a nonionic polyurethane.

2. The composition of claim 1, wherein the anionic polyurethane has a number-average molecular weight of at least 10,000 g/mol.

3. The composition of either claim 1 or claim 2, wherein the anionic polyurethane has an ethylene oxide monomeric unit content of less than 10% by weight, based on the total dry weight of the anionic polyurethane.

4. The composition of any one of claims 1 to 3, wherein the nonionic polyurethane has a number-average molecular weight of at most 30,000 g/mol.

5. The composition of any one of claims 1 to 4, wherein the nonionic polyurethane has an ethylene oxide monomeric unit content of more than 20% by weight, based on the total dry weight of the nonionic polyurethane.

6. The composition of any one of claims 1 to 5, wherein the nonionic polyurethane comprises ethylene oxide monomeric side-chain units in an amount of 12% to 80% by weight, based on the total dry weight of the nonionic polyurethane.

7. The composition of any one of claims 1 to 6, wherein the nonionic polyurethane comprises ethylene oxide monomeric main-chain units in an amount of less than 25% by weight, based on the total dry weight of the nonionic polyurethane.

8. The composition of any one of claims 1 to 7, wherein the composition is substantially free of acrylic polymer.

9. The composition of any one of claims 1 to 8, wherein the dry weight ratio of the anionic polyurethane to the nonionic polyurethane in the composition is from 25:1 to 1:15.

10. The composition of any one of claims 1 to 9, wherein the anionic polyurethane comprises a polyurethane made by chain-extending at least one oligomer which is the reaction product of: (i) a diisocyanate; (ii) a polyol; and (iii) an acid-functional polyol and/or an acid-functional chain extender; wherein the at least one oligomer is chain-extended with a short-chain diamine and/or water.

11. The composition of any one of claims 1 to 10, wherein the anionic polyurethane comprises from 5% to 60% by weight of the composition, based on the total dry weight of the composition.

12. The composition of any one of claims 1 to 11, wherein the nonionic polyurethane comprises from 1% to 50% by weight of the composition, based on the total dry weight of the composition.

13. A method of coating a substrate comprising providing the composition of any one of claims 1 to 12, and coating the composition onto a substrate.

14. A method of printing comprising:
a. performing the method of claim 13; and
b. printing an ink composition onto the coating.

15. The method of claim 14, further comprising drying the coating on the substrate prior to said printing.

16. The method of either claim 14 or claim 15, further comprising curing the ink composition onto the coating subsequent to said printing.

17. The method of claim 16, wherein said curing comprises thermal curing or UV-curing.

18. The method of either claim 16 or claim 17, further comprising drying the ink composition onto the coating subsequent to said printing.

19. The method of any one of claims 14 to 18, further comprising overprinting a material over the ink composition, subsequent to said printing.

20. The method of any one of claims 14 to 19, further comprising laminating a film-like or sheet-like material over the ink composition, subsequent to said printing.

## Patentansprüche

1. Tintenaufnehmende Beschichtungszusammensetzung, umfassend:
a. eine wässrige anionische Polyurethandispersion; und
b. eine wässrige Lösung eines nichtionischen Polyurethans.

2. Zusammensetzung nach Anspruch 1, wobei das anionische Polyurethan ein zahlenmittleres Molekulargewicht von mindestens 10.000 g/mol aufweist.

3. Zusammensetzung nach einem der Ansprüche 1 oder 2, wobei das anionische Polyurethan einen Gehalt an Ethylenoxidmonomereinheiten von weniger als 10 Gew.-%, bezogen auf das Gesamttrockengewicht des anionischen Polyurethans, aufweist.

4. Zusammensetzung nach einem der Ansprüche 1 bis 3, wobei das nichtionische Polyurethan ein zahlenmittleres Molekulargewicht von höchstens 30.000 g/mol aufweist.

5. Zusammensetzung nach einem der Ansprüche 1 bis 4, wobei das nichtionische Polyurethan einen Gehalt an Ethylenoxidmonomereinheiten von mehr als 20 Gew.-%, bezogen auf das Gesamttrockengewicht des nichtionischen Polyurethans, aufweist.

6. Zusammensetzung nach einem der Ansprüche 1 bis 5, wobei das nichtionische Polyurethan Ethylenoxidmonomerseitenketteneinheiten in einer Menge von 12 Gew.-% bis 80 Gew.-%, bezogen auf das Gesamttrockengewicht des nichtionischen Polyurethans, umfasst.

7. Zusammensetzung nach einem der Ansprüche 1 bis 6, wobei das nichtionische Polyurethan Ethylenoxidmonomerhauptketteneinheiten in einer Menge von weniger als 25 Gew.-%, bezogen auf das Gesamttrockengewicht des nichtionischen Polyurethans, umfasst.

8. Zusammensetzung nach einem der Ansprüche 1 bis 7, wobei die Zusammensetzung im Wesentlichen frei von Acrylpolymer ist.

9. Zusammensetzung nach einem der Ansprüche 1 bis 8, wobei das Trockengewichtsverhältnis des anionischen Polyurethans zu dem nichtionischen Polyurethan in der Zusammensetzung von 25 : 1 bis 1 : 15 beträgt.

10. Zusammensetzung nach einem der Ansprüche 1 bis 9, wobei das anionische Polyurethan ein Polyurethan umfasst, das durch Kettenverlängern mindestens eines Oligomers hergestellt wird, das das Reaktionsprodukt ist von: (i) einem Diisocyanat; (ii) einem Polyol; und (iii) einem säurefunktionellen Polyol und/oder einem säurefunktionellen Kettenverlängerer; wobei das mindestens eine Oligomer mit einem kurzkettigen Diamin und/oder Wasser kettenverlängert ist.

11. Zusammensetzung nach einem der Ansprüche 1 bis 10, wobei das anionische Polyurethan von zu 5 Gew.-% bis 60 Gew.-% der Zusammensetzung, bezogen auf das Gesamttrockengewicht der Zusammensetzung, umfasst.

12. Zusammensetzung nach einem der Ansprüche 1 bis 11, wobei das nichtionische Polyurethan von zu 1 Gew.-% bis 50 Gew.-% der Zusammensetzung, bezogen auf das Gesamttrockengewicht der Zusammensetzung, umfasst.

13. Verfahren zum Beschichten eines Substrats, umfassend das Bereitstellen der Zusammensetzung nach einem der Ansprüche 1 bis 12 und das Beschichten der Zusammensetzung auf ein Substrat.

14. Verfahren zum Drucken, umfassend:
a. Durchführen des Verfahrens nach Anspruch 13; und
b. Drucken einer Tintenzusammensetzung auf die Beschichtung.

15. Verfahren nach Anspruch 14, ferner umfassend das Trocknen der Beschichtung auf dem Substrat vor dem Drucken.

16. Verfahren nach einem der Ansprüche 14 oder 15, ferner umfassend ein Härten der Tintenzusammensetzung auf die Beschichtung nach dem Drucken.

17. Verfahren nach Anspruch 16, wobei das Härten thermisches Härten oder UV-Härten umfasst.

18. Verfahren nach einem der Ansprüche 16 oder 17, ferner umfassend das Trocknen der Tintenzusammensetzung auf die Beschichtung nach dem Drucken.

19. Verfahren nach einem der Ansprüche 14 bis 18, ferner umfassend ein Überdrucken eines Materials über die Tintenzusammensetzung nach dem Drucken.

20. Verfahren nach einem der Ansprüche 14 bis 19, ferner umfassend ein Laminieren eines filmartigen oder blattartigen Materials über der Tintenzusammensetzung nach dem Drucken.

## Revendications

1. Composition de revêtement récepteur d'encre comprenant :
a. une dispersion aqueuse de polyuréthane anionique ; et
b. une solution aqueuse d'un polyuréthane non ionique.

2. Composition selon la revendication 1, dans laquelle le polyuréthane anionique a une masse moléculaire moyenne en nombre d'au moins 10 000 g/mol.

3. Composition selon la revendication 1 ou la revendication 2, dans laquelle le polyuréthane anionique a une teneur en motifs monomères d'oxyde d'éthylène inférieure à 10 % en poids, en fonction du poids sec total du polyuréthane anionique.

4. Composition selon l'une quelconque des revendications 1 à 3, dans laquelle le polyuréthane non ionique a une masse moléculaire moyenne en nombre d'au plus 30 000 g/mol.

5. Composition selon l'une quelconque des revendications 1 à 4, dans laquelle le polyuréthane non ionique a une teneur en motifs monomères d'oxyde d'éthylène de plus de 20 % en poids, en fonction du poids sec total du polyuréthane non ionique.

6. Composition selon l'une quelconque des revendications 1 à 5, dans laquelle le polyuréthane non ionique comprend des motifs monomères de chaîne latérale d'oxyde d'éthylène en une quantité de 12 % à 80 % en poids, en fonction du poids sec total du polyuréthane non ionique.

7. Composition selon l'une quelconque des revendications 1 à 6, dans laquelle le polyuréthane non ionique comprend des motifs monomères de chaîne principale d'oxyde d'éthylène en une quantité de moins de 25 % en poids, en fonction du poids sec total du polyuréthane non ionique.

8. Composition selon l'une quelconque des revendications 1 à 7, la composition étant sensiblement dépourvue de polymère acrylique.

9. Composition selon l'une quelconque des revendications 1 à 8, dans laquelle le rapport pondéral sec du polyuréthane anionique au polyuréthane non ionique dans la composition va de 25:1 à 1:15.

10. Composition selon l'une quelconque des revendications 1 à 9, dans laquelle le polyuréthane anionique comprend un polyuréthane fabriqué par extension de chaîne d'au moins un oligomère qui est le produit de réaction de : (i) un diisocyanate ; (ii) un polyol ; et (iii) un polyol à fonctionnalité acide et/ou un agent d'allongement de chaîne à fonctionnalité acide ; dans laquelle l'au moins un oligomère a subi une extension de chaîne avec une diamine à chaîne courte et/ou de l'eau.

11. Composition selon l'une quelconque des revendications 1 à 10, dans laquelle le polyuréthane anionique constitue de 5 % à 60 % en poids de la composition, en fonction du poids sec total de la composition.

12. Composition selon l'une quelconque des revendications 1 à 11, dans laquelle le polyuréthane non ionique constitue de 1 % à 50 % en poids de la composition, en fonction du poids sec total de la composition.

13. Procédé de revêtement d'un substrat comprenant la fourniture de la composition selon l'une quelconque des revendications 1 à 12, et le revêtement de la composition sur un substrat.

14. Procédé d'impression comprenant :
a. la mise en oeuvre du procédé selon la revendication 13 ; et
b. l'impression d'une composition d'encre sur le revêtement.

15. Procédé selon la revendication 14, comprenant en outre le séchage du revêtement sur le substrat avant ladite impression.

16. Procédé selon la revendication 14 ou la revendication 15, comprenant en outre un durcissement de la composition d'encre sur le revêtement à la suite de ladite impression.

17. Procédé selon la revendication 16, dans lequel ledit durcissement comprend un durcissement thermique ou un durcissement par UV.

18. Procédé selon la revendication 16 ou la revendication 17, comprenant en outre un séchage de la composition d'encre sur le revêtement à la suite de ladite impression.

19. Procédé selon l'une quelconque des revendications 14 à 18, comprenant en outre la surimpression d'un matériau par-dessus la composition d'encre, à la suite de ladite impression.

20. Procédé selon l'une quelconque des revendications 14 à 19, comprenant en outre la stratification d'un matériau de type film ou de type feuille par-dessus la composition d'encre, à la suite de ladite impression.
